# Europäisches Patentamt
# European Patent Office
# Office européen des brevets

(19)

(11) Publication number: **0 009 014**
**B1**

(12)

# EUROPEAN PATENT SPECIFICATION

(45) Date of publication of patent specification: **08.06.83**

(51) Int. Cl.³: **B 65 G 57/04**

(21) Application number: **79850081.5**

(22) Date of filing: **03.09.79**

(54) Apparatus for conveying lengths of ferrous material.

(30) Priority: **05.09.78 SE 7809338**

(43) Date of publication of application:
**19.03.80 Bulletin 80/6**

(45) Publication of the grant of the patent:
**08.06.83 Bulletin 83/23**

(84) Designated Contracting States:
**DE FR GB IT NL**

(56) References cited:
**AT - B - 314 423**
**DE - A - 2 506 681**
**DE - B - 1 078 503**
**US - A - 3 831 780**

(73) Proprietor: **Johansson, Lars-Gunnar**
**Postlada 7727**
**S-951 90 Lulea (SE)**

(72) Inventor: **Johansson, Lars-Gunnar**
**Postlada 7727**
**S-951 90 Lulea (SE)**

(74) Representative: **Burman, Tore et al,**
**Bergling & Sundbergh AB P.O. Box 7645**
**S-103 94 Stockholm (SE)**

Courier Press, Leamington Spa, England

## Apparatus for conveying lengths of ferrous material

The present invention relates to conveying generally flat lengths of ferrous material, such as flat or profiled metal sheets, especially for stacking such lengths discharged from a shears or cutting means. The apparatus is of the kind comprising an endless belt conveyor including a plurality of endless belts running alongside of and parallel to each other, each belt having an upper and a lower run and the lower runs of the belts forming a lower run of the conveyor, the belts being permanently magnetic for coaction with the upper surfaces of the lengths during their conveyance, so that the lengths will be conveyed in a suspended condition by the lower run of the conveyor, a device for receiving said lengths and transferring them to the conveyor, and a device for removing conveyed lengths from the conveyor.

Within the metalworking industry, e.g. in manufacturing building sheeting, enamelled goods, sheet metal partition walls, etc., one often starts from material (typically cold-rolled thin sheet) in the form of a sheet web rolled into a coil. The coil, which can have a weight of about 5—10 tonnes, is placed in an apparatus for drawing the sheet web out and parting or cutting it into lengths or format sheets of a definite size, typically about 1 x 2 m, with the help of shears or a cutting mechanism. After parting, which can take place at a through rate of about 30—40 meters/minute (as much as 75 meters per minute, in some cases), the format sheets thus obtained are removed continuously and laid in stacks. Stacking can be done selectively to form several different stacks, depending on the format or quality of the sheets, or to enable the removal of a stack which cannot accept any more sheets. It will be understood without difficulty that stacking in accordance with the above requires rapid and reliable apparatus to convey the individual sheets for stacking, preferably in more than one stack.

There is a corresponding demand for conveying apparatus with stacking potential also in many process lines, e.g. for coating format plates with paint, plastics or the like, or in sorting and classifying lines and sheet profiling lines.

A plurality of various conveying apparatuses permitting stacking in accordance with what has been said above has been previously proposed. Examples of typical apparatuses working with endless conveying apparatus are the so-called vacuum stacker, which utilizes an endless belt conveyor having suction cups mounted thereon and circulating therewith, said cups dependently carrying a sheet to be stacked, and stackers utilizing an endless belt conveyor having magnets fixed between the upper and lower runs of the conveyor, these magnets holding sheets which, as a result of friction action, are brought to accompany the lower run of the conveyor in a suspended state. Both these types of stacker utilize endless conveyors having full width, i.e. an unbroken transverse extension which is substantially equal to the width of the sheets to be conveyed and stacked. For the endless conveyors, this results in belt sag problems with associated limitations with respect to length and width. All of the known types of stacker have complicated apparatus, which is not easily variable, for setting down conveyed sheets in one or more predetermined stacks. As far as the vacuum stacker is concerned, the sheets which are to be stacked must also be clean and unaffected by rust, as well as being completely flat. For the other kind of stacker, the friction between the underside of the conveyor lower run and conveyed sheets on the one hand, and between the upper side of the conveyor lower run and the fixed magnets on the other hand, make special demands on the surface structure of the affected surfaces, and the friction drive between the lower run of the conveyor and the conveyed sheets requires a specific contact surface to function satisfactorily, which puts special demands on the flatness of the sheets.

An apparatus has also been suggested (AT—B—314423) which comprises an endless belt conveyor including a number of parallel endless belts, the endless belts being entirely permanently magnetic for coaction with the upper surfaces of ferrous sheets to be conveyed from a stack of sheets onto a roller conveyor, or vice versa. In order to secure that one sheet only leaves the stack at a time, or that a conveyed sheet will be stacked properly, resp., the ends of the lower runs of the endless belts facing the stack automatically are maintained at a predetermined distance from the uppermost sheet of the stack. The other ends of the lower runs of the endless belts are fixed just above the end of the roller conveyor. Thus, the runs of the endless belts automatically are swung vertically around said fixed ends so as to provide a continuous conveying path between the stack and the roller conveyor. This known apparatus is rather complicated and cannot be used for selective stacking in any one of several stacks arranged in succession. Also, the lengths of the endless belts must be short, because otherwise sagging problems will be met.

In summary, it can thus be established that the known types of conveying and stacking apparatuses using endless belt conveyors each have many disadvantages, such as: expensiveness, complicated setting-down apparatus, the requirement of special surface flatness or structure of the conveyed sheets, limited dimensions for the endless conveyor, lack of flexibility and adaptation to different conveying and stacking tasks.

The object of the present invention is therefore to provide new apparatus of the kind mentioned in the introduction, with which the above-mentioned drawbacks are avoided while other advantages are also gained. This object is achieved by the apparatus in accordance with the invention being given the characterizing features disclosed in the accompanying patent claims.

The apparatus in accordance with the invention is thus distinguished in that the edges of the belts in their lower runs are supported and guided, at least at intervals, in belt edge guides, so that sagging of the lower runs of the belts is substantially prevented, in that the belts are permanently magnetic by each having separate permanent magnet means distributed on the outside of the belt, and in that the device for removing conveyed lengths comprises deflecting means arranged and/or insertable in the conveying run for the lengths for coaction with the front edge of a conveyed length, so that the length is given a curved course and thereby dislocated or tilted in relation to the permanent magnet means coacting with the length, whereby the grip between the permanent magnet means and the length ceases and the length falls freely from the endless belt conveyor. Suitably the permanent magnet means are limitedly movably mounted on the outside of the belts, so that the means can adjust themselves to irregularities and slants of the surface of the lengths with which said means coact during conveyance of the lengths. It is hereby advantageous if the permanent magnet means include pole shoes intended to engage against the surface of a conveyed length and which are limitedly movably disposed relative to the respective belt. The pole shoes preferably extend substantially transversely relative to the associated belt, and can be pivotably mounted substantially transverse to the associated belt for enabling limited pivoting movement in the longitudinal direction of the associated belt and/or limited movement in a direction towards and away from the associated belt.

To advantage, said deflecting means comprises means, preferably with fork or finger-like arresting or deflecting members, which are adapted for being moved down into coaction with a length, between the lower runs of the belts, for setting down the length. The means can suitably include guide surfaces which, when disposed actively, are slanting in relation to the conveying run and thereby deflect a front edge of a conveyed plate in a direction away from the conveying run.

The device for receiving the lengths and transferring them to the endless belt conveyor can suitably comprise roller means coacting with a feed portion of the conveyor lower run, the lower runs of the endless belts not being edge guided at said feed portion and the roller means being so disposed that utilizing the ability of the belts to yield in a direction away from the runs, they ensure engagement between a fed-in length and the permanent magnet means.

An apparatus made in accordance with the invention has been found, inter alia, to provide the following advantages:
— no problems with sag of the belts of the endless belt conveyor, which can be made optionally long and wide;
— small, simple and cheap permanent magnet means can be utilized;
— no special requirements for the length to be handled, and these can be irregular, profiled etc.;
— division into a plurality of endless belts and the guidance of these gives stable and uniform operation with the possibility of higher speed, less driving power, lower belt costs, and the possibility of lower belt tension;
— completely free space under the conveyor, no sage or voluminous removing or setting-down devices;
— the possibility of simple redisposition of the setting-down location;
— the possibility of simple adjustment of the endless belts transversely to suit a particular working task;
— easy, uncomplicated and rapid setting-down;
— positive feed to the endless belt conveyor, no demands on exact positioning when lengths are fed into the conveyor;
— generally uncomplicated, operationally reliable and convenient for service.

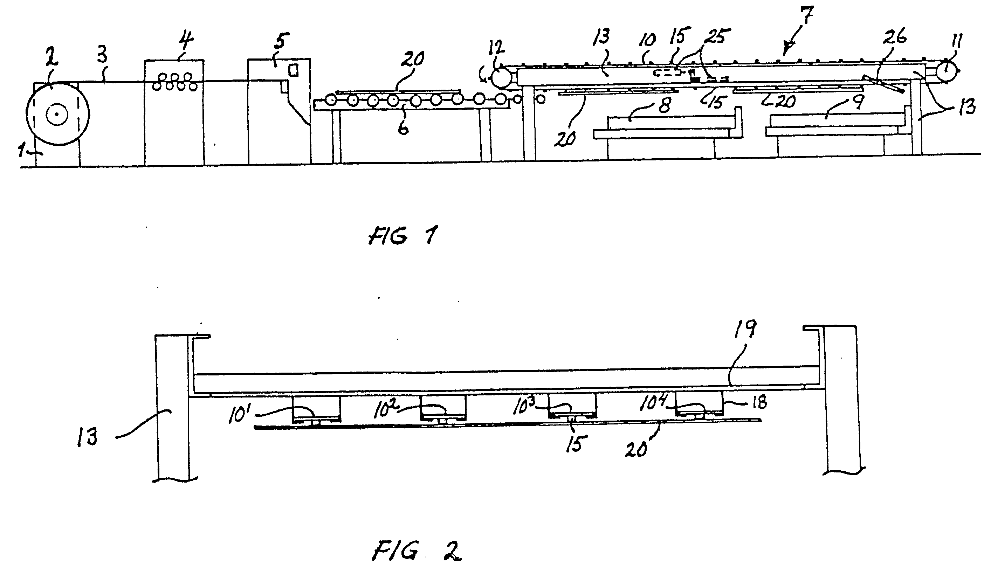

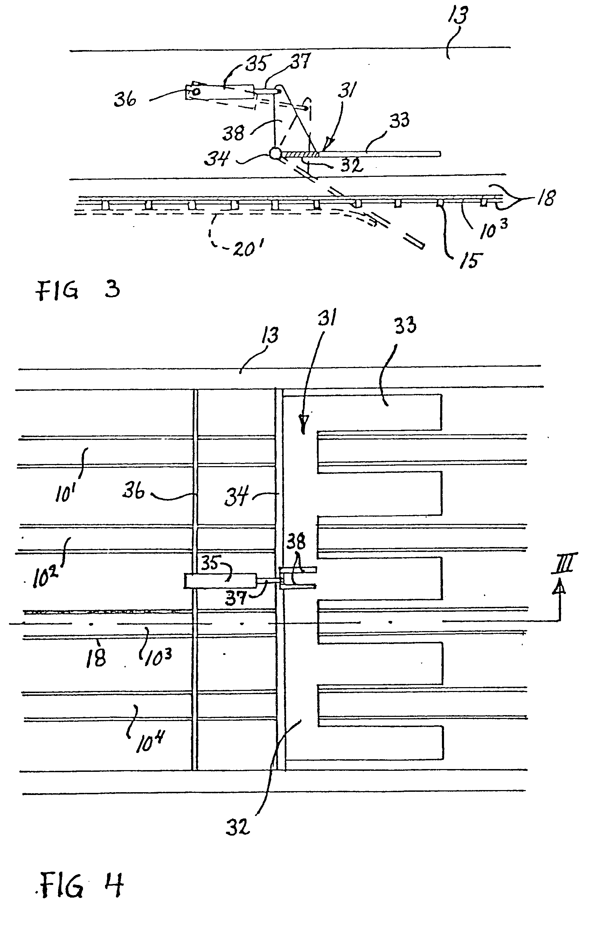

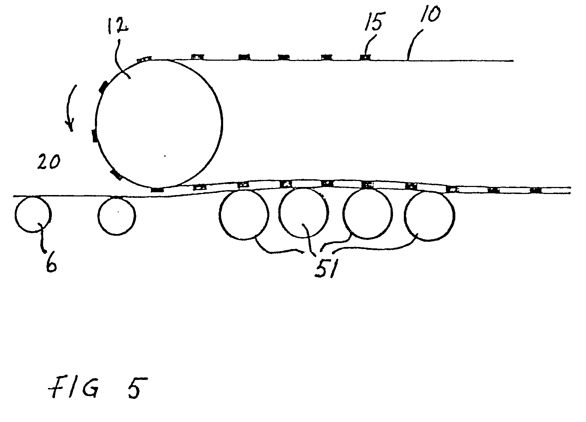

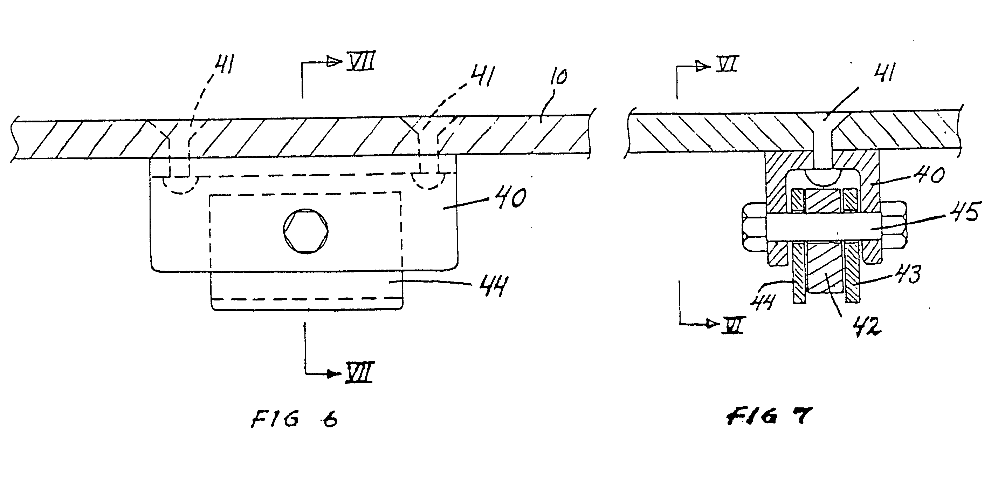

The above and other distinguishing features of and advantages with an apparatus in accordance with the invention will be more clearly understood from the following description of an embodiment while referring to the appended drawings comprising seven figures. Figure 1 is a schematic side view of a plant for cutting up a continuous sheet web into format sheets and for taking away and stacking said sheets, the endless belt conveyor incorporated in the plant being shown greatly simplified. Figure 2 is a partial cross sectional view of the endless belt conveyor, said view showing the construction of the lower sheet conveying run of the conveyor formed by means of the lower runs of four endless belts, guided in their edge portions and outwardly provided with permanent magnets. Figure 3 is a schematic partial longitudinal sectional view illustrating the arrangement of a controllable setting-down or relinquishing device (also indicated in Figure 1), the downwardly-swung working attitude of the means and its action in this position on a forwardly conveyed sheet is shown by dashed lines, the section being taken along the line III—III in Figure 4. Figure 4 is a schematic partial view from above of the device of Figure 3. Figure 5 is a schematic partial side view of the feed portion of the endless belt conveyor and roller means arranged at said portion for ensuring engagement between a fed-in plate the permanent magnet means on the outside of the endless belts. Figures 6 and 7 are a partial cross-sectional view and a partial longitudinal sectional view, respectively, illustrating the design of a permanent magnet means and its attachment to the associated endless belt, the view according to Figure 6 being taken along the line VI—VI in Figure 7 and the view according to Figure 7 being taken along the line VII—VII in Figure 6.

The plant in accordance with the invention, shown on the drawing, comprises a conventional cutting section consisting of a frame 1 for a coil 2 of strip 3, which is to be parted into format sheets, straightening apparatus 4 and cutting apparatus 5, a roller conveyor 6 for receiving and further conveyance of cut-off format sheets 20, an endless conveyor 7 connected to the roller conveyor 6 and two stacking stations 8, 9 arranged under the endless belt conveyor to receive sheets 20. The conveyor 7 comprises four parallel and horizontally extending endless belts $10^1$, $10^2$, $10^3$ and $10^4$. At either end of the conveyor, the endless belts 10 are taken over associated driving pulleys and tension or return pulleys 11 and 12, suitably mounted on the frame 13 of the conveyor 7. The belts 10 and the rollers of the roller conveyor 6 are driven synchronously in a way not more closely shown, but obvious to those skilled in the art, i.e. so that sheets 20 fed from the roller conveyor 6 to the belt conveyor 7 travel at substantially the same speed as the belts. The lower runs of the endless belts 10 form the conveying run of the conveyor, which is thus horizontal in the example shown. The belts 10 are relatively narrow but arranged spaced and in such plurality that the conveying run is given the desired width. The belts can, for example, have a width of about 10 cm and be arranged with a mutual centre distance of about 30 cm. The conveying run thus obtained is suitable for conveying sheets 20 with a width of up to about 120 cm. The belts 10 are provided with permanent magnet means 15 on their outsides, said means being arranged consecutively along the centre of each belt at a centre spacing of about 15 cm in this example.

The lower run edge areas of the belts 10 are supported and guided substantially along the whole length of the conveyor 7, possibly with the exception of a minor especially formed feed portion, the importance which will be explained later. As will be seen best from Figure 2, said edge areas of the belts 10 are guided in belt edge guiding means comprising profiles or sections 18 with an L-shaped cross section, and being disposed along the lower runs of the belts, two profiles for each belt. The edge areas of each belt thus rest on substantially horizontal supporting and sliding surfaces, formed by the flat leg or flange portions of each pair of L-sections which face each other. The upstanding legs of the L-sections in each pair of L-sections are spaced from each other at a slightly greater distance than the width of the associated belt 10. The sections 18 are attached, for example, to cross ties or bars 19 (not more closely shown) forming a part of the frame 13 of the conveyor 7. It will be seen that the sections can be fastened simply to the cross ties 19 so that they are displaceable sideways, i.e. so that the spacing between the belts 10 can be adjusted. This naturally requires the corresponding availability of transverse adjustment for the rollers 11 and 12, which is very easy to arrange since the rollers are mounted on a common shaft. The ability to adjust the belts in this way, with respect to their mutual spacing, enables the conveying of profiled sheets, for instance, of different kinds and with different transverse spacing between upstanding profile portions which which the permanent magnet means can coact.

It will also be understood that the upper runs of the belts 10 can be supported in a suitable way between the rollers 11 and 12 if this should be required, especially for very long conveyors.

As will be seen from Figure 1, the plant shown in provided with two setting-down or relinquishing devices 25 and 26 for selectively relinquishing or setting down a conveyed sheet 20 at the first stacking station 8 or the second stacking station 9. The setting-down device 25 is suspended in the frame 13 of the conveyor 7 above the lower run of the conveyor, namely in the space between the upper and lower runs of the conveyor. The device 25, which will be described in detail with reference to Figures 3 and 4, is adapted, for relinquishing a sheet 20, to coact with the front edge of the latter via means which are momentarily brought down into the run of the sheet between the lower parts of the endless belts 10. The device 26 is mounted at the end of the conveyor and is therefore rigidly mounted. Its active means arranged in the run of a sheet 20 and between the lower parts of the belts 10 are however in principle the same as the downwardly thrustable means of the device 25, and therefore only the device 25 will be described in detail.

The device 25 comprises (see Figures 3 and 4) a fork-like means 31 pivotably suspended above the lower runs of the endless belts 10. The means 31 comprises a cross member 32 extending across the conveyor, and five fingers or deflecting elements 33 projecting from it in the longitudinal direction of the conveyor. The cross member 32 is pivotably arranged on a cross shaft 34, at its ends mounted in the frame 13. The cross member and thus the fingers 33 can thus pivot vertically about a horizontal axis. The fingers 33 are located between the endless belts 10 and at the sides thereof resp., and can thus be swung downwards between the lower parts of the belts and at the sides thereof, resp. without coming into contact with, or disturbing the belts. The operating mechanism of the device 25 comprises a piston-cylinder unit, the cylinder 35 thereof being pivotably mounted in a transverse shaft means 36 attached to the frame 13 while the piston rod 37 thereof is pivotably attached to a bracket 38 upstanding from the cross member 32. Then the piston and thereby the piston rod 37 of the piston-cylinder unit is pulled in, the fork-like means 31 assumes the position shown by full lines in Figure 3, i.e. with the fingers 33 in a substantially horizontal attitude, or in other words parallel to the endless belts 10. When the piston of the unit is thrust out and thereby the piston rod 37 is pushed forward, the fork-like means 31 will pivot about the shaft 34 down to the inclined attitude shown with dashed lines, for coaction with a sheet $20^1$ which is to be deposited onto the stack below. When the front edge of the sheet $20^1$ is deflected by the fingers 33, as indicated in Figure 3, the sheet will be made to curve and thus it will be tilted loose from the nearest permanent magnet means 15. It has been found that this situation spreads very rapidly to remaining gripping points between the sheet $20^1$ and the magnet means 15 and that the sheet is relinquished practically immediately. When this has occurred, the fork-like means 31 can be swung back, if the next sheet is to be set down in the next stack with the help of device 26. As should be understood, device 26 can quite simply consist of a rigidly mounted fork-like means with a downward inclination.

It is emphasized that device 25 can very easily be mounted so that it is displaceable in the longitudinal direction of the frame 13, to allow variation in the location of the stack beneath it.

A preferred embodiment of the permanent magnet means 15 will now be described in more detail while referring to Figures 6 and 7. As is apparent from these figures, the means 15 has its major extension in a transverse direction. The means is built up on a small U- or channel section, with its longitudinal axis transverse to that of the conveyor, the section being riveted to its associated belt 10 with the aid of two rivets 41. A permanent magnet 42 with two pole shoes 43, 44 fitted to it are mounted in the channel section. The magnet 42 and pole shoes 43, 44 are rectangular flat plates, together having a width which is somewhat lesser than the width of the inner space of the channel section. The magnet and pole shoes extend downwardly out past the channel section, the pole shoes 43, 44 extending further than the magnet 42 and thus constitute abutment means when there is contact between the permanent magnet means 15 and a carried sheet 20. In a normal position, illustrated in Figures 6 and 7, the contact surfaces of the pole shoes are substantially horizontal, i.e. parallel to the belt 10.

The magnet 42 and pole shoes are pivotably mounted with clearance on a horizontal pin 45, centrally arranged in the channel section and extending in the longitudinal direction of the conveyor. The upper portions of the magnet 42 and pole shoes 43, 44 facing towards the web or bottom of the section 40 are at a distance from the bottom of the section such that they can pivot substantially, i.e. until their upper corners reach the bottom of the section. The size of the available pivoting angle in either direction, this angle determining how much the surface of the sheet with which the permanent magnet means 15 is to coact may incline in relation to the belt 10, is normally not critical but can suitably be about 20—30°. As a result of the clearance between the pin 45 and the corresponding mounting holes in the magnet 42 and pole shoes 43, 44, and the clearance sideways between the walls or flanges of the channel section 40 and the magnet and pole shoes, the latter also have limited movement to and from the belt 10 and limited pivoting ability in the longitudinal direction of the conveyor. It has been found suitable that the latter should not be greater than about ±5—10°. It should be emphasized that this latter pivoting ability must naturally not be so great that the tilting action to release a sheet from the permanent magnet means is prevented, or made considerably more difficult.

As should be noted, the ability of movement in different directions gives the described permanent magnet means 15 extremely good capacity for adjusting to irregularities and slants in the sheet surface with which the means is to coact.

An advantageous embodiment of the transfer between the roller conveyor 6 and conveyor 7 will now be described in more detail with reference to Figure 5. As will be understood, the roller conveyor 6 and the lower run of the conveyor 7, i.e. the lower runs of the belts 10, should be in register with each other such that a sheet 20 can go from being carried by the rollers of the conveyor 6 to retention by the permanent magnet means 15 without any problems. To ensure that the magnet means 15 come into positive engagement with the sheet 20 to be conveyed at the beginning of the conveyor 7, even if the above-mentioned registry is not perfect, according to the invention, the lower runs of the endless belts 10 can be withou edge guidance in the feed area, while roller means 51 are arranged for sprung coaction with the belt lower runs in this area, a sheet which is fed to the conveyor being brought to pass between the roller means 51 and the belts 10. The roller means 51 are disposed somewhat above the conveying plane of the conveyor 7, the resiliency of the belts 10 being utilized to provide good contact between a fed-in sheet 20 and the magnet means 15. To avoid problems with direct contact between the magnet means 15 and the roller means 51, the latter are made with limited transverse extension and are displaced in relation to the belts 10. It is pointed out that the roller means could naturally be suitably spring biassed towards the belts and that corresponding roller means at a suitable height location could also be arranged in a feed area where the belts are guided at their edges in the way already described.

## Claims

1. Apparatus for conveying generally flat lengths (20) of ferrous material, such as flat or profiled metal sheets, especially for stacking such lengths discharged from a shears or cutting means, comprising an endless belt conveyor (7) including a plurality of endless belts (10) running alongside of and parallel to each other, each belt having an upper and a lower run and the lower runs of the belts forming a lower run of the conveyor, the belts being permanently magnetic for coaction with the upper surfaces of the lengths (20) during their conveyance, so that the lengths will be conveyed in a suspended condition by the lower run of the conveyor, a device (6) for receiving said lengths and transferring them to the conveyor, and a device (25, 26) for removing conveyed lengths (20) from the conveyor (7), characterized in that the edges of the belts (10) in their lower runs are supported and guided, at least at intervals, in belt edge guides (18), so that sagging of the lower runs of the belts is substantially prevented, in that the belts (10) are permanently magnetic by each having separate permanent magnet means (15) distributed along the belt and mounted on the outside of the belt, and in that the device (25, 26) for removing conveyed lengths (20) comprises deflecting means (31) arranged and/or insertable in the conveying path for the lengths for coaction with the front edge of a conveyed length, so that the length is given a curved course and thereby dislocated or tilted in relation to the permanent magnet means (15) coacting with the length, whereby the grip between the permanent magnet means and the length ceases and the length falls freely from the endless belt conveyor (7).

2. Apparatus as claimed in claim 1, characterized in that the permanent magnet means (15) are limitedly movably mounted on the outside of the belts (10), so that the means can adjust themselves to unevenness and slants of the surface of the lengths (20) with which the means coact while conveying the length.

3. Apparatus as claimed in claim 2, characterized in that the permanent magnet means (15) include pole shoes (43, 44) intended to engage against the surface of a conveyed length (20) and which are arranged limitedly movable relative to the respective belt (10).

4. Apparatus as claimed in claim 3, characterized in that the pole shoes (43, 44) extend substantially transverse to the respective belt (10), the pole shoes being mounted pivotably, substantially transverse to the associated belt and also with the availability of limited pivoting movement in the longitudinal direction of the associated belt and/or limited movement towards and from the associated belt.

5. Apparatus as claimed in any one of the preceding claims, characterized in that the device (6) for receiving the lengths (20) and transferring these to the endless belt conveyor (7) comprises roller means (51) coordinating with a feed portion of the lower run of the endless belt conveyor, said roller means being adapted such that with utilization of an ability of the belts to yield in a direction away from the path engagement is ensured between a fed-in length and the permanent magnet means (15), said belt edge guiding means (18) being optionally arranged to guide the edges of the lower runs of the endless belts (10) first of all after the feed portion thereof.

6. Apparatus as claimed in any of the preceding claims, characterized in that said deflecting means (31) comprise means (33) arranged to be brought down between the lower parts of the belts (10) into the conveying path for the conveyed lengths (20).

7. Apparatus as claimed in any of the preceding claims, characterized in that said deflecting means comprise one or more guide surfaces, inclined in relation to the conveying path of the conveyed lengths, while in coaction with the front edge of a conveyed length deflects the latter in a direction away from the conveyor track.

## Revendications

1. Dispositif de transport de feuilles généralement planes (20) en matériau magnétique, telles que de tôles métalliques planes ou profilées, spécialement pour empiler ces feuilles déchargées d'un dispositif de cisaillage ou de coupe, comprenant un transporteur à courroie sans fin (7) incluant un ensemble de courroies sans fin (10) parallèles entre elles et se déplaçant les unes à côté des autres, chaque courroie comportant un brin supérieur et un brin inférieur et les brins inférieurs des courroies constituant un brin inférieur du transporteur, les courroies étant à magnétisme permanent pour coopérer avec les surfaces supérieures des feuilles (20) pendant leur transport, de manière que les feuilles soient transportées dans un état suspendu par le brin inférieur du transporteur, un dispositif (6) pour recevoir lesdites feuilles et les transférer jusqu'au transporteur, et un dispositif (25, 26) pour retirer les feuilles transportées (20) du transporteur (7), caractérisé en ce que les bords des courroies (10) sont supportés et guidés dans leurs parcours inférieurs, au moins à des intervalles, dans des guides de bord de courroie (18), de manière à empêcher essentiellement un affaissement des brins inférieurs des courroies, en ce que les courroies (10) sont à magnétisme permanent en comportant chacune des aimants permanents (15) séparés répartis le long de la courroie et montés sur le côté extérieur de la courroie, et en ce que ledit dispositif (25, 26) pour retirer les feuilles transportées (20) comprend un moyen de déviation (31) disposé et/ou inséré dans le chemin de transport pour les feuilles pour agir ensemble avec le bord avant d'une feuille transportée, de manière à donner à la feuille un trajet incurvé et la déplacer ou l'incliner ainsi par rapport aux aimants permanents (15) coopérant avec la feuille, ce qui permet de faire cesser la liaison entre les aimants permanents et la feuille et ainsi la feuille tombe librement du transporteur à courroie sans fin (7).

2. Dispositif selon la revendication 1, caractérisé en ce que les aimants permanents (15) sont montés pour pouvoir se déplacer de façon limitée sur le côté extérieur des courroies (10), de sorte que les aimants peuvent s'adapter d'eux-mêmes aux irrégularités et aux dénivellations de la surface des feuilles (20) avec lesquelles les aimants coopèrent pendant le transporteur des feuilles.

3. Dispositif selon la revendication 2, caractérisé en ce que les aimants permanents (15) comprennent des épanouissements polaires (43, 44) destinés à entrer en contact avec la surface d'une feuille transportée (20) et qui sont disposés pour pouvoir se déplacer de façon limitée par rapport à la courroie respective (10).

4. Dispositif selon la revendication 3, caractérisé en ce que les épanouissements polaires (43, 44) s'étendent essentiellement transversalement par rapport à la courroie respective (10), les épanouissements polaires étant montés de façon à pouvoir tourner, essentiellement transversalement à la courroie associée, en ayant aussi la possibilité de mouvement de pivotement limité dans la direction longitudinale de la courroie associée et/ou de mouvement de translation limité vers et à partir de la courroie associée.

5. Dispositif selon l'une quelconque des revendications 1 à 4, caractérisé en ce que le dispositif (6) pour recevoir les feuilles (20) et les transférer jusqu'au transporteur à courroie sans fin (7) comprend des rouleaux (51) coopérant avec une partie d'alimentation du brin inférieur du transporteur à courroie sans fin, lesdits rouleaux étant adaptés de manière à ce qu'en utilisant la capacité des courroies de fléchir dans une direction s'éloignant du trajet de transport, ils assurent un contact entre une feuille engagée et les aimants permanents (15), les guides de bord de courroie (18) étant disposés facultivement pur guider les bords des brins inférieurs des courroies sans fin (10) tout d'abord après leur partie d'alimentation.

6. Dispositif selon l'une quelconque des revendications 1 à 5, caractérisé en ce que ledit moyen de déviation (31) comprend des moyens (33) disposés pour être abaissés entre les parties inférieures des courroies (10) jusque dans le trajet de transport pour les feuilles transportées (20).

7. Dispositif selon l'une quelconque des revendications 1 à 6, caractérisé en ce que ledit moyen de déviation comprend une ou plusieurs surfaces de guidage, inclinées par rapport au trajet de transport des feuilles transportées, qui en coopérant avec le bord avant d'une feuille transportée dévient cetter dernière dans une direction s'éloignant du trajet du transporteur.

**Patentansprüche**

1. Vorrichtung zum Fördern von im allgemeinen flachen Abschnitten (20) aus ferromagnetischem Material, wie flachen oder profilierten Blechen, insbesondere zum Stapeln solcher aus einer Schere oder einer Schneidvorrichtung auslaufender Abschnitte, umfassend einen endlosen Bandförderer (7), der eine Mehrzahl endloser, nebeneinander und parallel laufender Bänder (10) aufweist, von denen jedes ein oberes Trum und ein unteres Trum hat und die unteren Trums der Bänder ein unteres Trum des Förderers bilden, wobei die Bänder permanentmagnetisch zum Zusammenwirken mit den oberen Flächen der Abschnitte (20) während ihres Förderns sind, so dass die Abschnitte durch das untere Trum des Förderers hängend gefördert werden, aus einer Vorrichtung (6) zur Aufnahme und Übergabe der Abschnitte an den Förderer, und aus einer Vorrichtung (25, 26) zum Entfernen geförderter Abschnitte (20) aus dem Förderer (7), dadurch gekennzeichnet, dass die Ränder der Bänder (10) in ihren unteren Trums zumindest in Abständen in Bandrandführungen (18) gehalten und geführt sind, so dass ein Durchhängen der unteren Trums der Bänder weitgehend vermiden wird, dass die Bänder (10) in der Weise permanentmagnetisch sind, dass auf der Aussenseite jedes Bandes separate permanentmagnetische Mittel (15) länglich verteilt angeordnet sind, und dass die Vorrichtung (25, 26) zum Entfernen geförderter Abschnitte (20) eine Ablenkvorrichtung (31) umfasst, die in dem Förderweg für die Abschnitte angeordnet oder in diesen einbringbar ist, um mit der Vorderkante eines geförderten Abschnittes zusammenzuwirken, so dass diesem eine gebogene Bahn gegeben und in Bezug auf die mit dem Abschnitt zusammenwirkenden permanentmagnetischen Mittel (15) versetzt oder schräggestellt wird, wodurch das Festhalten zwischen den permanentmagnetischen Mitteln und dem Abschnitt aufhört und der Abschnitt frei von dem endlosen Bandförderer (7) herabfällt.

2. Vorrichtung nach Anspruch 1, dadurch gekennzeichnet, dass die permanentmagnetischen Mittel (15) auf der Aussenseite der Bänder (10) begrenzt beweglich angeordnet sind, so dass die Mittel sich in Bezug auf Unebenheiten und Schrägen der Oberfläche der Abschnitte (20) ausrichten können, mit denen die Mittel während des Förderns der Abschnitte zusammenwirken.

3. Vorrichtung nach Anspruch 2, dadurch gekennzeichnet, dass die permanentmagnetischen Mittel (15) Polschuhe (43, 44) umfassen, die zum Eingriff mit der Oberfläche eines geförderten Abschnittes (20) vorgesehen sind und die in Bezug auf das betreffende Band (10) begrenzt beweglich angeordnet sind.

4. Vorrichtung nach Anspruch 3, dadurch gekennzeichnet, dass die Polschuhe (43, 44) sich im wesentlichen quer zu dem entsprechenden Band (10) erstrecken, wobei die Polschuhe kippbar angeordnet sind, und zwar im wesentlichen quer zu dem zugehörigen Band und ausserdem mit der Möglichkeit einer begrenzten Kippbewegung in Längsrichtung des zugehörigen Bandes und/oder einer begrenzten Bewegung zu dem zugeordneten Band hin oder von diesem weg.

5. Vorrichtung nach einem der vorhergehenden Ansprüche, dadurch gekennzeichnet, dass die Vorrichtung (6) zur Aufnahme der Abschnitte (20) und zu deren Übergabe an den endlosen Bandförderer (7) Rollmittel (51) umfasst, die mit einem Zuführteil des unteren Trums des endlosen Bandförderers zusammenwirken, wobei diese Rollmittel so angepasst sind, dass bei Ausnutzung einer Fähigkeit der Bänder zum Nachgeben in einer von dem Förderweg abgewandten Richtung ein Eingriff zwischen einem zugeführten Abschnitt und den permanentmagnetischen Mitteln (15) sichergestellt ist, wobei die Bandrandführungen (18) gegebenenfalls so angeordnet sind, dass sie die Ränder der unteren Trums der endlosen Bänder (10) erst nach deren Zuführteil führen.

6. Vorrichtung nach einem der vorhergehenden Ansprüche, dadurch gekennzeichnet, dass die Ablenkvorrichtung (31) Einrichtungen (33) umfasst, die so angeordnet sind, dass sie nach unten zwischen die unteren Teile der Bänder (10) in den Förderweg für die geförderten Abschnitte (20) gebracht werden können.

7. Vorrichtung nach einem der vorhergehenden Ansprüche, dadurch gekennzeichnet, dass die Ablenkvorrichtung eine oder mehrere Führungsflächen umfasst, die gegenüber dem Förderweg der geförderten Abschnitte schräg liegen, die im Zusammenwirken mit der Vorderkante eines geförderten Abschnittes der letztere in eine Richtung weg von dem Förderweg ablenken.

**FIG 1**

**FIG 2**

# 0 009 014

FIG 3

FIG 4

FIG 5

FIG 6

FIG 7

0 009 014